# EUROPEAN PATENT APPLICATION

(11) **EP 2 237 012 A1**
(43) Date of publication of application: **06.10.2010**
(21) Application number: 08869670.3
(22) Date of filing: 26.12.2008
(51) Int. Cl.: G01M 17/00, G01M 13/02

(54) **VEHICLE AXLE TEST BENCH**

(30) Priority: 09.01.2008 ES 200800028
(71) Applicant: Fundación Cetena, 31110 Noain (Navarra) (ES)
(72) Inventor: ETAYO FERNÁNDEZ, José Luis, E-31016 Pamplona (Navarra) (ES); BIERA GALÁN, Jorge, E-31192 Mutilva Alta (Navarra) (ES)
(74) Representative: Ungria Lopez, Javier
(86) International application number: PCT/ES2008/000803
(87) International publication number: WO 2009/087248

(57) **Abstract**

The invention relates to a test bench which can be used to reproduce vertical, lateral and longitudinal forces and to introduce the effect generated by the movement of the steering system by applying loads along the entire course of the system, such that components can be checked in a real performance environment.

## Description

### OBJECT OF THE INVENTION

The present invention, as expressed in the title of this specification, relates to a test bench for vehicle axles and more particularly for front axles of heavy vehicles, trucks or buses, being laboratory systems which allow reproduction of the real performance of these elements and acceleration of their deterioration. In this manner, it is possible to determine both the functionality and useful life of the axle.

The object of the invention is to offer a test bench that will allow application of loads throughout the steering course, whereupon validation of the components can be carried out in a real performance environment.

### BACKGROUND OF THE INVENTION

Current benches allow testing of suspension and assembly elements by applying dynamic loads to an axle, controlled by a closed force loop. The axle is fixed to the bench by mounting it on a sufficiently rigid metal structure.

At present, test benches for front axles of heavy vehicles allow reproduction of the following stresses: vertical, lateral and longitudinal. However, the possibility of introducing the effect that can cause movement of the steering system is null or, at best, limited to non-real values.

### DESCRIPTION OF THE INVENTION

Generally speaking, the vehicle test bench that is the object of the invention includes a combination of different actuation systems in the steering knuckle, horizontal components due to lateral and longitudinal loads caused by taking curves and sudden braking, in addition to the vertical components resulting from the road reaction force against the axle. These actuation systems are triggered by hydraulic actuators in the relevant directions.

Vertical actuation is carried out by applying the hydraulic actuator force in a horizontal direction to an oscillating elbow lever through a central point of the test bench frame. The other lever arm presses against another vertical lever that moves, duly guided, on fixed vertical rods and sliding brushings. Pressure is measured using a load cell, vertically represented on a bearing plate which acts upon an adjustable subassembly of a mechanism having a ball bearing so that the resulting stress is exclusively axial.

The subassembly may move over the surface of the bearing plate, as is the case when the steering system turns the wheel. This subassembly includes a sliding plate that is directly supported on the aforementioned bearing plate; a ball bearing and an axial wheel rod that joins it to the simulated wheel.

Horizontal actuations due to lateral and longitudinal loads when reproducing the effects of taking curves and sudden braking on performance are lateral and longitudinal, and are carried out on the wheel rod by means of two hydraulic horizontal actuators connected to said rod at different levels, one on top of the other; the connection is made using ball joints, thereby having independent orientations to allow angular variations therebetween.

Movement of the steering system in the range of +37°/-53° is achieved by another hydraulic linear actuator coupled to the steering arm.

The wheel hub system is the joining element of the aforementioned systems and defines the position of the static load radius (SLR). The simulated wheel is connected to wheel rod, vertical and "commercial steering ball joint."

There is a system for controlling hydraulic actuator movements and measuring devices (load cells and position transducers). The former act upon the specimen being tested, while the latter gather the necessary data for test analysis and progress. Therefore, co-ordination between the signals captured and the commands sent to the test bench actuators is required for test magnitudes to remain within their specified values.

In the specific case of the test bench designed in accordance with the invention, the system used is that known as closed current loop signal control.

For the purpose of helping to better understand the characteristics of the invention and forming an integral part of this specification, drawings are attached wherein the following has been represented in an illustrative and non-limiting manner:

### BRIEF DESCRIPTION OF THE DRAWINGS

Figure 1 shows a perspective view of a front axle of a bus, which is going to be mounted on the test bench that is the object of the invention.
Figure 2 shows a partial view of the front axle of figure 1, for the purpose of observing the loads that act upon the steering knuckle.
Figure 3 shows a perspective view of the vehicle axle test bench in accordance with the invention.
Figure 4 shows a partial perspective view of that shown in figure 3, in the actuation area of the different actuation systems.

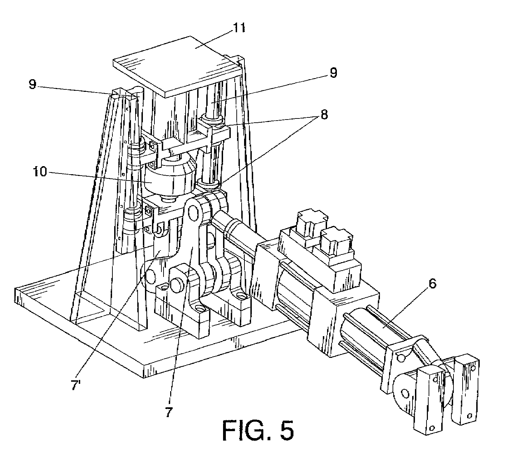

Figure 5 shows a partial perspective view of that shown in figure 3, in the connection area of the vertical actuation system actuator.
Figure 6 shows a partial view of that shown in figure 3, in the actuation area of a vertical load, defined by the bearing plate and vertical adjustable subassembly.
Figure 7 shows an exploded perspective view of the vertical adjustable subassembly of figure 6.
Figure 8 shows a schematic view of the stresses with horizontal components caused by taking curves and sudden braking which act upon the wheel.
Figure 9 shows a partial view of that shown in figure 3, where the actuators that reproduce the horizontal loads are positioned.
Figure 10 shows an exploded perspective view of one of the actuators of figure 9.
Figure 11 shows an exploded perspective view of the coupling of the actuation rod for actuating the steering system, according to figure 3.
Figure 12 shows an exploded view of the wheel hub of figure 3.

### DESCRIPTION OF THE PREFERRED EMBODIMENT

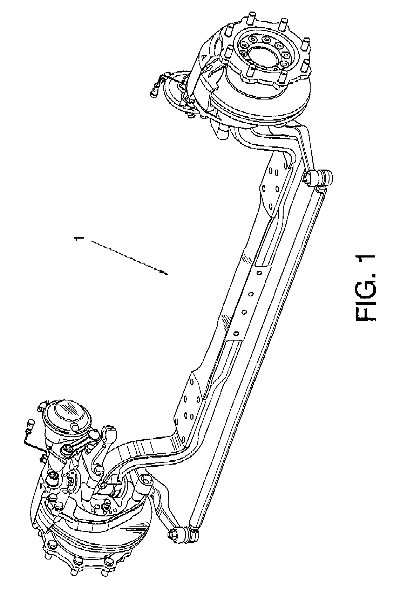

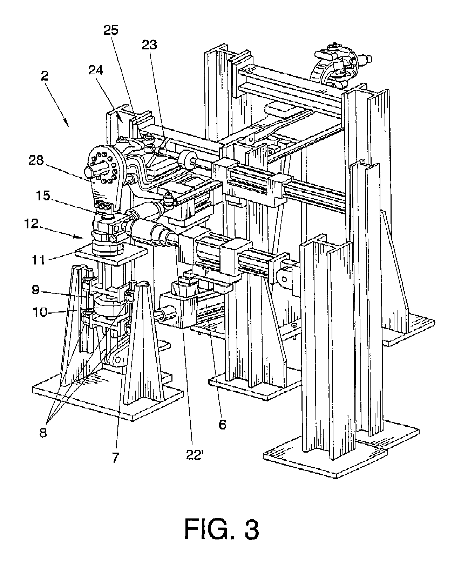

Making reference to the numbering used in the figures and particularly in relation to figure 1, we can observe a front axle 1 of a bus that will be mounted on the test bench that is the object of the invention, referenced as 2 in figure 3.

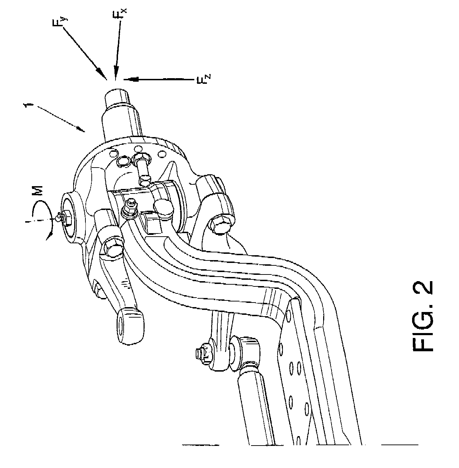

Figure 2 shows the loads on the steering knuckles, in the component directions Fₓ, F_{y} and F_{z} and at a momentum M with respect to the vertical axis.

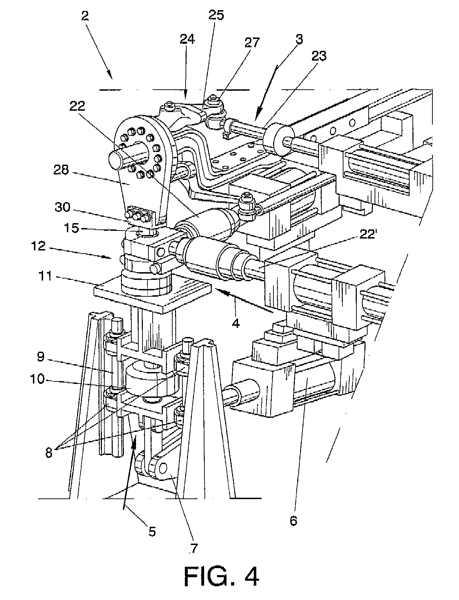

Figure 4 shows the combination of the different actuation systems (on the steering knuckle as indicated by arrow 3, the horizontal actuations as indicated by arrow 4 and the vertical actuations as indicated by arrow 5) with their corresponding hydraulic actuators, thereby defining the composition of the test bench 2.

With regard to the vertical actuations, real test conditions require the bank to allow the application of a load of up to 150 KN on the steering knuckle, in a direction identical to that of the road reaction force against the axle. In the case of the design of the test bench that is the object of the invention, the force exerted by the "actuator" 6 is transmitted on a 1:1 ratio through the "lever" system 7-7', vertically guided by means of sliding bushings 8 and vertical guides 9; it is quantified by means of a "load cell" 10 and is included in the wheel contact point using a "ball bearing system." In this manner, the stress supported by the load cell 10 is exclusively axial, in such a manner that the reading only corresponds to the load applied to the test component. Likewise, the use of linear guides 9 and bushings 8 isolates said load cell 10 from transversal reactions.

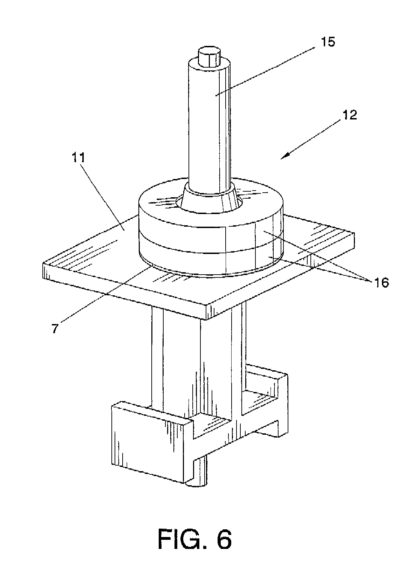

Coupling of the load to the specimen (figure 6) allows the load application point to move in accordance with the position of the steering knuckle, throughout its movement range.

The assembly is formed by the bearing plate 11 with an exclusively vertical movement and the "adjustable steering subassembly" 12 that moves towards the specimen. This system allows the subassembly to move over the bearing plate, as is the case when the wheel of a vehicle is turned by the steering system thereof on the ground. Likewise, it allows introduction of the reactions that occur during vehicle circulation due to the weight and load thereof.

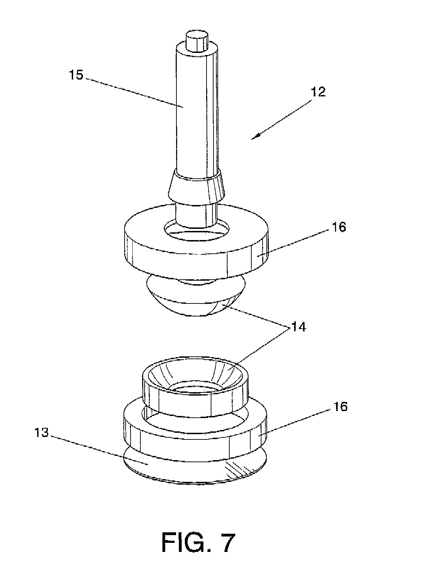

The adjustable subassembly 12 is composed of the following elements (figure 7):
- Sliding plate 13, manufactured from non-slip material, in such a manner as to minimize the friction against the bearing plate and avoid undesired transversal reactions to a maximum.
- Ball bearing 14, which forms the essential part of its assembly, given that it allows orientation thereof with respect to the relative movements of the steering system and ground reaction. It consists of a commercial ball bearing capable of supporting the loads produced at the contact point.
- Wheel rod 15, by way of an element that enables joining of the subassembly to the simulated wheel system.
- Mounting frames 16 which enable mounting of the

sliding plate 13 and ball bearing 14 on the assembly. Likewise, they avoid disassembly of the latter when the system is functioning.

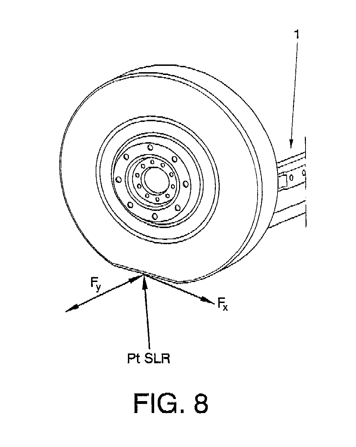

With regard to the horizontal actuations, it is known that stress from horizontal components are also produced in a vehicle (figure 8), with respect to the terrestrial plane, due to lateral F_{y} and longitudinal Fₓ loads, caused by taking curves and sudden braking. This implies that the test bench must be capable of reproducing these performances.

The assembly must allow the application of a lateral and longitudinal load on a specific point of the geometry of the specimen. Said point is the so-called "SLR Point", where the wheel of the vehicle comes into contact with the ground when the latter is loaded. SLR stands for STATIC LOAD RADIUS, which is defined as the distance between the contact point of the wheel with the ground, with the vehicle loaded, and the knuckle axis.

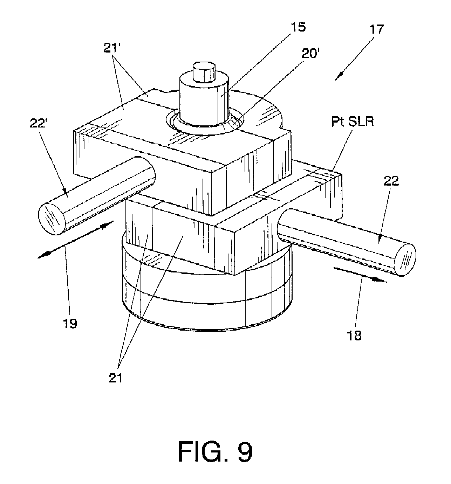

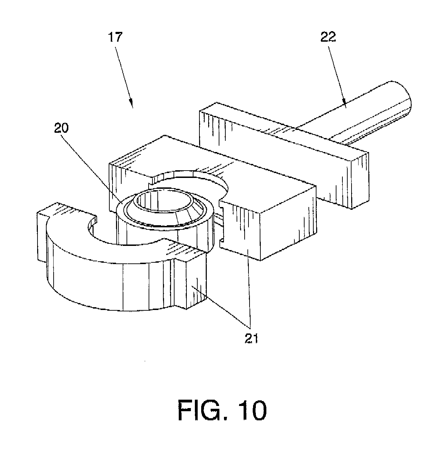

In order to reproduce the horizontal loads, the test bench 2 is equipped with a set of "horizontal actuations", referenced by number 17 in figure 9, and their corresponding hydraulic actuators fixed to the stricture of the test bench 2 (figure 3). The aforementioned design implies a very modular system that is easy to assemble, formed by two identical coupling systems (figure 10), one for each type of stress to be exerted: lateral loads F_{y} in the direction marked by arrow 19 and longitudinal loads Fₓ in the direction of arrow 18. Each system is formed by a ball joint head 20 or 20' which allows orientation of the load in the event of knuckle movements and axle deformation, a clamp 21 or 21' by way of a joining element and an actuator coupling 22 or 22' which allows application of the force by mounting the hydraulic actuator. Both actuator systems are coupled to the common rod or wheel rod 15 (figure 7). The purpose of this duplicity is for each horizontal stress to have its own independent orientation given that, as the ball joints 20 that constitute the actuators are embedded and the "SLR Point" moves in a circle on rotating the steering system, a variation occurs in the angle formed by the actuators.

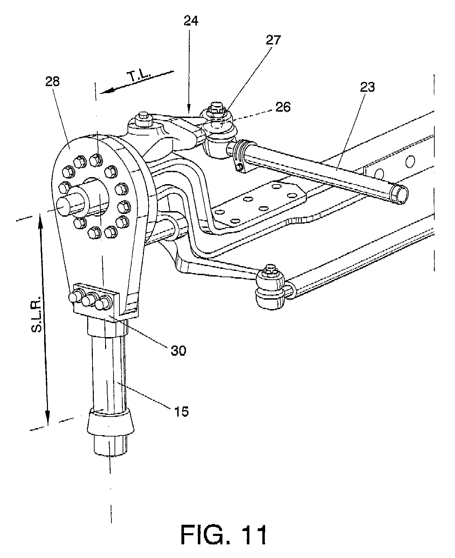

The problem posed by this design is that, at present, both forces are not directly incident upon the same point (SLR). However, this drawback can be overcome by adapting the force to the new (SLR), in such a manner that the original resultant momentum is maintained on the knuckle axis 1. Now referring to figure 11, movement of the steering system within the specified range (+37°/- 53°) is carried out by coupling a hydraulic linear actuator connected to the rod 23 on the steering arm 25.

Therefore, the steering actuation system is formed by a "commercial steering ball joint" 24 which allows mounting of the actuator on the "steering arm" 25 by means of the vertical axis 26 and the locknut 27. Electronic control of the actuator allows movement of the knuckle towards the desired positions and measurement of the resultant momenta.

With regard to the wheel hub system (figure 11), it can be observed that it is designed to be the joining element of the aforementioned steering actuation systems, for load application, with the steering knuckle. Its design defines the position of the so-called "static load radius" (SLR) in the test component. On the other hand, the simulated wheel 28 must be positioned with respect to the knuckle axis, within the distance marked by the "track" (TL), of the vehicle.

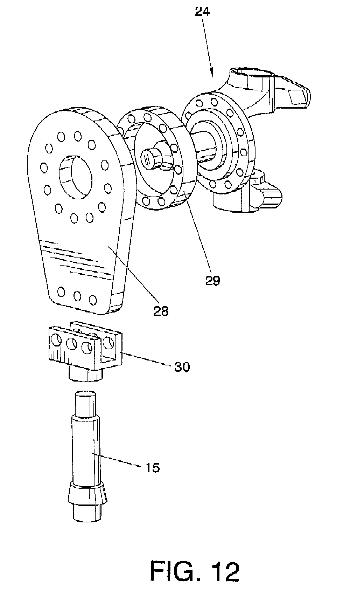

The "simulated wheel hub" is designed as a system specific to each of the models that may form the range of the tested product. That is, both the wheel 28 (see figure 12) and the "shim" 29 depend on the model being tested. The wheel 28 varies in length in accordance with the SLR of the model; the thickness of the shim 29 defines the position of the track (TL).

The "rod coupling" 30 element is designed as a universal component of the test bench and allows assembly of the "wheel rod" 15, also universal, defined in the vertical and horizontal load introduction systems.

The test bench preferably has the following test capabilities:
- Front axles, non-driving, of heavy vehicles.
- Load capacity:
   · Vertical F_{z} ≤ 150 KN
   · Lateral F_{y} ≤ 100 KN
   · Longitudinal Fₓ ≤ 100 KN
- Steering course: -37°/+53°
- Caster angle: 0-6°
- Rotation torque s 7,500 Nm
- Rotation frequency s 5 Hz
- SLR (Static Load Radius) approximately 375-500 mm.

## Claims

1. VEHICLE AXLE TEST BENCH, particularly for front axles of heavy vehicles, reproducing vertical, lateral and longitudinal stresses on the steering knuckle, accelerating its worsening for determining both functionality and the lifetime of the axle, **characterized in that** it comprises:
- a vertical actuation system (5) where the force exerted by an actuator (6) is transmitted through a lever system (7, 7'), is sent in bushings (8) and vertical rods (9), is quantified in a. load cell (10) and said force is applied to the wheel contact point through a ball bearing system,
- a horizontal actuation system (4) due to lateral and longitudinal loads, which reproduces those generated by taking curves and sudden braking, on a specific point called "SLR Point" where the wheel-to-ground contact is produced, having horizontal actuators (17) defined by the same number of ball joint heads (20) assembled on the same number of clamps (21, 21') with a coupling (22, 22'), commanded by second hydraulic actuators,
- a steering actuation system (3), by coupling a third hydraulic actuator to the steering arm (25), through a commercial steering ball joint (24) which allows mounting of said actuator on the steering arm (25) and electronic control of the actuator to move the steering knuckle to the required positions and measure the resultant momenta,
- a simulated wheel hub systems by way of a joining element of the aforementioned systems, for load application, with the steering knuckle, including both the simulated wheel (28), the length of which varies in accordance with the static load radius (SLR) of the corresponding model, and the shim (29), the thickness of which defines the position of the track,
- a control system by means of measuring devices that gather hydraulic actuator (6) data.

2. VEHICLE AXLE TEST BENCH, according to claim 1, **characterized in that** the coupling of the load to the specimen includes a bearing plate (11) with exclusively vertical movement and an adjustable steering subassembly (12) that moves towards the specimen.

3. VEHICLE AXLE TEST BENCH, according to claim 2, **characterized in that** the adjustable subassembly (12) is composed of a sliding plate (13) whereon a ball bearing (14) rests, disposed between two mounting frames (16) and a wheel rod (15), disposed in an upright position, for joining to the simulated wheel system (28).

4. VEHICLE AXLE TEST BENCH, according to the preceding claims, **characterized in that** the two ball joint heads (20) of the horizontal actuation systems (4) are threaded onto the wheel rod (15) of the adjustable subassembly (12).

5. VEHICLE AXLE TEST BENCH, according to the preceding claims, **characterized in that** the simulated wheel (28) of the simulated wheel hub system is connected to the wheel rod (15) by means of an intermediate coupling support (30).
